**Europäisches Patentamt**

**European Patent Office**

**Office européen des brevets**

(19)

(11) Veröffentlichungsnummer : **0 309 899 B1**

(12) **EUROPÄISCHE PATENTSCHRIFT**

(45) Veröffentlichungstag der Patentschrift :
13.11.91 Patentblatt 91/46

(51) Int. Cl.$^5$ : **F16H 53/02, B23P 11/02**

(21) Anmeldenummer : **88115538.6**

(22) Anmeldetag : **22.09.88**

(54) Antriebswelle mit gruppenweise darauf befestigten Antriebselementen.

(30) Priorität : 02.10.87 DE 8713285 U

(43) Veröffentlichungstag der Anmeldung :
05.04.89 Patentblatt 89/14

(45) Bekanntmachung des Hinweises auf die
Patenterteilung :
13.11.91 Patentblatt 91/46

(84) Benannte Vertragsstaaten :
BE CH DE ES FR GB IT LI NL SE

(56) Entgegenhaltungen :
EP-A- 0 213 529
EP-A- 0 292 795
DE-A- 3 540 979
US-A- 4 382 390
US-A- 4 708 029

(73) Patentinhaber : Emitec Gesellschaft für
Emissionstechnologie mbH
Hauptstrasse 150
W-5204 Lohmar 1 (DE)

(72) Erfinder : Swars, Helmut
Riedweg 11
W-5060 Bergisch Gladbach 1 (DE)

(74) Vertreter : Neumann, Ernst Dieter, Dipl.-Ing. et
al
HARWARDT NEUMANN PATENTANWÄLTE
Scheerengasse 2 Postfach 1455
W-5200 Siegburg (DE)

# Beschreibung

Die vorliegende Erfindung betrifft eine Antriebswelle mit darauf kraftschlüssig befestigten Antriebselementen, wobei zumindest jeweils zwei der Antriebselemente zu Gruppen zusammengefaßt und die einzelnen Mitglieder der Gruppe durch elastisch aufgeweitete, dünnwandige Verbindungshülsen miteinander verbunden sind. Unter Antriebselementen sind solche zu verstehen, die geeignet sind, mit anderen Maschinenteilen zusammenzuwirken, wie Zahnräder, Nocken, aber auch Teile von Gleit- und Wälzlagern. Die Erfindung wird im folgenden am Beispiel einer für den Einbau in eine Verbrennungskraftmaschine bestimmten Nockenwelle beschrieben, ist jedoch nicht auf diesen Anwendungsfall beschränkt. In der EP-A-0213529 wird ein Verfahren zum Befestigen von Antriebselementen auf einer Hohlwelle vorgeschlagen, bei der diese aus einem handelsüblichen Rohr besteht, auf die die Elemente aufgeschoben werden, worauf sie durch Aufweiten der darunterliegenden Abschnitte des Rohres auf diesem befestigt werden. Dabei wird der Werkstoff des Rohres selbst plastisch, derjenige der Elemente jedoch nur elastisch verformt, so daß durch das Rückfedern der letzteren der den Kraftschluß zwischen den beiden Teilen bewirkende Druck erzeugt wird. Damit die Verbindung den im Betrieb zu erwartenden Belastungen standhält, muß das Produkt aus dem Anpreßdruck und der Anpreßfläche ein bestimmtes Maß erreichen; wenn, wie bislang üblich, die Breite der Nocken ebenso wie der Außendurchmesser der Hohlwelle nicht über die aus anderen konstruktiven Gründen gegebenen Abmessungen hinaus vergrößert werden, so wird ein verhältnismäßig hoher Aufweitdruck (in der Größenordnung von 2500 bar) benötigt, um der Hohlwelle die nötige plastische und den Nocken die nötige elastische Verformung mitzuteilen. Diese Verformung der Nocken beschränkt sich nicht auf einen inneren, der Welle benachbarten Bereich, sondern erstreckt sich über seinen gesamten Querschnitt, und zwar, da dieser nicht rotationssymmetrisch ist, in azimutal unterschiedlichem Ausmaß. Es hat sich gezeigt, daß dadurch einer der mit dem erwähnten Verfahren angestrebten Vorteile wieder verloren geht, nämlich den Nocken bereits vor dem Zusammenbau maßlich fertig zu bearbeiten und auch etwaige gezielte Beeinflussungen des Werkstoffgefüges (z.B. durch Oberflächenhärten) vorzunehmen. Da insbesondere bei Verwendung derartig gehärteter Nocken durch die Aufweitung unter Umständen Oberflächenrisse hervorgerufen werden, wird in der älteren, jedoch nicht vorveröffentlichten EP-A-0292795 vorgeschlagen, die Antriebselemente in axial voneinander abgesetzte Bereiche aufzuteilen, deren Werkstoffe jeweils unterschiedliche Eigenschaften, insbesondere verschieden hohe Dehnbarkeit aufweisen. Die dort gezeigten zu Gruppen von zumindest jeweils zweien zusammengefaßten Antriebselemente haben mit den verbindenden dünnwandigen Verbindungshülsen jeweils vor dem Befestigen auf der Welle den gleichen Innendurchmesser. Damit treten bei einem Aufschrumpfen der Antriebselemente und Verbindungshülsen oder bei einem Aufweiten der Hohlwelle auf der ganzen Länge, z.B. mittels Ziehdorn, die oben genannten Schäden unvermindert auf. Das gleiche gilt bei einem nicht genau axial positionierten Aufweiten der Hohlwelle im Bereich der Verbindungshülsen.

Aufgabe der vorliegenden Erfindung ist eine Antriebswelle mit darauf kraftschlüssig befestigten über Verbindungshülsen zu zumindest zweien zusammengefaßten Antriebselementen, bei der die elastische Aufweitung derselben so erfolgt, daß sie die Maßhaltigkeit der fertig hergestellten Antriebselemente nicht gefährdet. Dies soll unabhängig von der Herstellung der kraftschlüssigen Verbindung, z.B. durch Aufschrumpfen, oder der Art und Genauigkeit eines Aufweitens der Hohlwelle sichergestellt sein.

Die Lösung dieser Aufgabe erfolgt dadurch, daß die Antriebselemente vor dem Befestigen auf der Welle einen größeren Innendurchmesser aufweisen als die Verbindungshülsen. Erfindungsgemäß wird somit vorgeschlagen, den Kraftschluß nur zwischen den Verbindungshülsen und der Welle herzustellen, die Antriebselemente selbst aber in ihrem Innendurchmesser leicht zu vergrößern, so daß die Aufweitung der Welle lediglich zum Schließen des Spaltes zwischen beiden Teilen führt, nicht jedoch zu einer merklichen Aufweitung des Elementes. Dadurch, daß die Antriebselemente, wie vorgeschlagen, wenigstens teilweise durch dünnwandige (und dadurch eine höhere Dehnbarkeit aufweisende) Hülsen miteinander verbunden werden, z.B. in Form von Doppelnocken, wie sie in neuerer Zeit für Mehrventilverbrennungskraftmaschinen in Gebrauch gekommen sind, so erhöht sich einmal die zur Herstellung des Kraftschlusses zur Verfügung stehende Fläche, wodurch der Grad der elastischen Verformung herabgesetzt werden kann ; unterstützt durch die infolge der Dünnwandigkeit erhöhte Dehnbarkeit der Hülsen, kann im Falle hydraulischen Verformens der Hohlwelle der Aufweitdruck selbst herabgesetzt werden. In den Antriebselementen selbst wird die elastische Verformung auf die Verbindungshülse beschränkt. Es können auch Antriebselemente unterschiedlicher Art zu Gruppen kombiniert werden, etwa Nocken mit Lagerschalen, oder die Verbindungshülsen selbst können dank entsprechender Werkstoffwahl und Oberflächenbeschaffenheit für letzteren Zweck genutzt werden.

In weiterer Ausgestaltung der Erfindung sind die zu einer Gruppe zusammengefaßten Antriebselemente und die dazugehörigen Verbindungshülsen in einem einzigen Stück hergestellt ; axial unterschiedliche Werkstoffeigenschaften sind zwar möglich, nicht aber erforderlich.

Gemäß den bereits genannten Alternativen können die Antriebselemente einmal in der oben beschriebenen Art durch inneres Aufweiten der zu diesem Zweck hohlen Welle befestigt werden, andererseits aber auch durch das als Äquivalent anzusehende Aufschrumpfen. Da bei letzterem Verfahren die Antriebselemente mit Rücksicht auf die Stabilität des Werkstoffgefüges nicht beliebig hoch erhitzt werden können, sind die beim anschließenden Abkühlen erzielbaren Flächendrücke nur verhältnismäßig gering, so daß hier einer Vergrößerung der Anpreßfläche eine erhöhte Bedeutung zukommt.

Insbesondere für Antriebselemente, die wie Nocken keinen rotationssymmetrischen Querschnitt aufweisen, wird vorgeschlagen, daß im Längsschnitt desselben gesehen die Materialdicken über einen bestimmten Bereich verringert werden.

Die Anforderungen an die Dehnfähigkeit des Werkstoffes der Antriebselemente können verhältnismäßig gering gehalten werden, so daß diese z.B. aus Temperguß hergestellt werden können, einem Werkstoff, der noch andere vorteilhafte Eigenschaften aufweist, die ihn für diesen Zweck besonders geeignet machen.

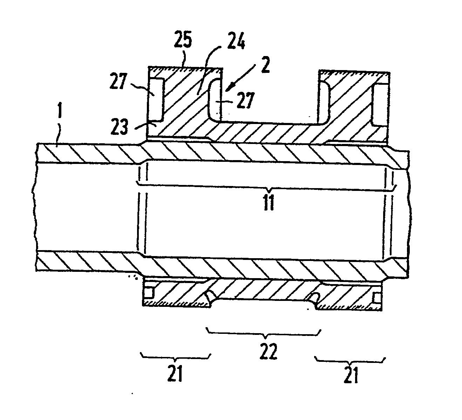

Ein Ausführungsbeispiel der Erfindung ist in der Zeichnung dargestellt, und zwar im Längsaxialschnitt. Auf eine Hohlwelle 1 sind Doppelnocken 2 aufgeschoben, die jeweils aus zwei, die eigentlichen Nocken bildenden beschnitte 21 und einer sie verbindenden Hülse 22 bestehen. Mittels einer hier nicht gezeigten, dem Fachmann jedoch bekannten hydraulischen Drucksonde sind Bereiche 11 der Hohlwelle aufgeweitet und dabei plastisch verformt worden. Die Verformung teilte sich den Verbindungshülsen 22 mit, jedoch nur im elastischen Bereich ; durch deren Rückfederung wurde der die Welle und Antriebselemente miteinander verbindende Kraftschluß hergestellt. In der gezeigten Ausführungsform erstreckt sich der Aufweitbereich 11 über die gesamte axiale Länge des Doppelnockens 2. Um eine unerwünscht große, insbesondere sich bis zu seiner Oberfläche 25 erstreckende Verformung des Nockens 21 zu vermeiden, weisen die Nocken 21 von vornherein einen etwas größeren lichten Durchmesser als die Verbindungshülsen 22 auf, so daß sich die elastische Verformung praktisch nur der letzteren mitteilt. Es können Ausnehmungen 27 vorgesehen werden, durch die zwischen einem radial inneren Bereich 23, der gegebenenfalls geringfügig elastisch aufgeweitet wird, und dem äußeren Bereich 25 Stege 24 gebildet werden, in denen sich die elastische Verformung vollständig abbauen kann.

**Patentansprüche**

1. Antriebswelle (1) mit darauf kraftschlüssig befestigten Antriebselementen (21), wobei zumindest jeweils zwei der Antriebselemente (21) zu Gruppen zusammengefaßt und die einzelnen Mitglieder der Gruppe durch elastisch aufgeweitete, dünnwandige Verbindungshülsen (22) miteinander verbunden sind, dadurch gekennzeichnet, daß die Antriebselemente (21) vor dem Befestigen auf der Welle einen größeren Innendurchmesser aufweisen als die Verbindungshülsen (22).

2. Antriebswelle nach Anspruch 1, dadurch gekennzeichnet, daß die Antriebselemente (21) einstückig mit den Verbindungshülsen (22) hergestellt sind.

3. Antriebswelle nach Anspruch 1, dadurch gekennzeichnet, daß die Antriebswelle (1) hohl und zumindest im Bereich der Verbindungshülsen (22) plastisch aufgeweitet ist.

4. Antriebswelle nach Anspruch 1, dadurch gekennzeichnet, daß die Verbindungshülsen (22) auf die Welle (1) aufgeschrumpft sind.

5. Antriebswelle nach einem oder mehreren der Ansprüche 1 bis 4, insbesondere mit nicht rotationssymmetrischen Antriebselementen (21), dadurch gekennzeichnet, daß Antriebselemente (21) mit axialen Ausnehmungen (27) versehen sind derart, daß zwischen einem radial inneren, zur Welle (1) konzentrischen Bereich (23) der Elemente (21) und einem radial äußeren, im wesentlichen gleichbleibend dicken Bereich (25) Stege (24) mit verringertem Querschnitt gebildet werden.

6. Antriebswelle nach Anspruch 1 oder 2, dadurch gekennzeichnet, daß zumindest einige der Antriebselemente (21) aus einem Werkstoff mit einer Dehnfähigkeit von mindestens 0,5% hergestellt sind.

**Claims**

1. A driveshaft (1) with drive elements (21) mounted thereon in a force-locking way, with at least two of the drive elements (21) in each case being combined to form a group and with the individual group members being connected to each other by elastically expanded, thin-walled connecting sleeves (22), characterised in that prior to being mounted on the shaft, the drive elements (21) have a larger internal diameter than the connecting sleeves (22).

2. A driveshaft according to claim 1, characterised in that the drive elements (21) are produced to be integral with the connecting sleeves (22).

3. A driveshaft according to claim 1, characterised in that the driveshaft (1) is hollow and that at least in the region of the connecting sleeves (22) it is plastically expanded.

4. A driveshaft according to claim 1, characterised in that the connecting sleeves (22) are shrunk on to the shaft (1).

5. A driveshaft according to one or several of claims 1 to 4, especially having drive elements (21) which are not rotationally symmetrical, characterised in that drive elements (21) with axial recesses (27) have been provided in such a way that between a radially inner region (23) of the elements (21) which is concentric relative to the shaft (1) and a radially outer region (25) of a substantially uniform thickness there are formed webs (24) with a reduced cross-section.

6. A driveshaft according to claim 1 or 2, characterised in that at least some of the drive elements (21) consist of a material with a ductility of at least 0.5%.

## Revendications

1. Arbre d'entraînement (1) avec éléments d'entraînement (21) qui y sont fixés par une liaison par serrage, lesdits éléments d'entraînement (21) étant groupés en groupes d'au moins deux, et les membres individuels de chaque groupe étant mutuellement assemblés par des manchons de liaison (22) à mince paroi dilatés élastiquement, caractérisé par le fait qu'avant la fixation sur l'arbre, les éléments d'entraînement (21) présentent un diamètre intérieur plus grand que les manchons de liaison (22).

2. Arbre d'entraînement selon revendication 1, caractérisé par le fait que les éléments d'entraînement (21) sont réalisés d'un seul tenant avec les manchons de liaison (22).

3. Arbre d'entraînement selon revendication 1, caractérisé par le fait que l'arbre d'entraînement (1) est creux et est dilaté plastiquement au moins dans la région des manchons de liaison (22).

4. Arbre d'entraînement selon revendication 1, caractérisé par le fait que les manchons de liaison (22) sont frettés sur l'arbre (1).

5. Arbre d'entraînement selon une ou plusieurs des revendications 1 à 4, notamment avec des éléments d'entraînement sans symétrie de révolution (21), caractérisé par le fait que les éléments d'entraînement (21) sont munis d'évidements axiaux (27) de manière telle que des âmes (24) ayant une section réduite soient formées entre une région radialement intérieure (23) des éléments (21), concentrique à l'arbre (1), et une région radialement extérieure (25) et d'épaisseur sensiblement invariable.

6. Arbre d'entraînement selon revendication 1 ou 2, caractérisé par le fait qu'au moins quelques uns des éléments d'entraînemet (21) sont fabriqués en une matière ayant une extensibilité d'au moins 0,5%.